# EUROPÄISCHE PATENTSCHRIFT

(11) **EP 2 292 404 B1**
(45) Veröffentlichungstag und Bekanntmachung des Hinweises auf die Patenterteilung: **26.09.2012**
(21) Anmeldenummer: 10174580.0
(22) Anmeldetag: 31.08.2010
(51) Int. Cl.: B29C 49/48, B29C 33/30

(54) **Vorrichtung zum Umformen von Kunststoffbehältnissen mit einer Blasform**
Apparatus for blow moulding plastic containers
Dispositif de formage par soufflage des recipients plastiques

(30) Priorität: 02.09.2009 DE 102009039696
(43) Veröffentlichungstag der Anmeldung: 09.03.2011
(73) Patentinhaber: Krones AG, 93073 Neutraubling (DE)
(72) Erfinder: Meinzinger, Rupert, 94356 Kirchroth (DE)
(74) Vertreter: Bittner, Bernhard

(56) Entgegenhaltungen:
- EP-A2- 0 893 221
- WO-A2-03/009972
- DE-C1- 3 613 543
- FR-A1- 2 899 144
- US-A- 5 552 098
- US-A1- 2006 233 909
- US-A1- 2007 269 545
- DATABASE WPI Week 199737 Thomson Scientific, London, GB; AN 1997-398259 XP002646989, -& JP 9 174559 A (JAPAN STEEL WORKS LTD) 8. Juli 1997 (1997-07-08)
- DATABASE WPI Week 200920 Thomson Scientific, London, GB; AN 2009-F87988 XP002646990, & JP 4 228374 B1 (NISHIMURA K) 25. Februar 2009 (2009-02-25)
- DATABASE WPI Week 200568 Thomson Scientific, London, GB; AN 2005-661011 XP002646991, -& JP 2005 246634 A (TOMITA KK) 15. September 2005 (2005-09-15)

## Beschreibung

Die vorliegende Erfindung bezieht sich auf eine Vorrichtung zum Umformen von Kunststoffbehältnissen mit einer Blasform gemäß dem Oberbegriff des Patentanspruches 1. Derartige Vorrichtungen werden beispielsweise in der Getränkeindustrie für die Umformung von Rohlingen zu Behältnissen eingesetzt

Die aus dem firmenintemen Stand der Technik bekannten Vorrichtungen zum Umformen von Kunststoffbehältnissen mit einer Blasform weisen die Probleme auf, dass ein Blasformwechsel und/oder eine Blasformfixierung sehr zeitintensiv ist und aufwendige mechanische Einrichtungen voraussetzt.

Die US 2006/0233909 A1 beschreibt eine Schnellwechselblasform, bei der eine Blasform lösbar und magnetisch gekoppelt an einem Träger angeordnet ist. Aus der US 2007/0269545 A1 ist eine magnetische Schnellwechselblasform bekannt. Die US 5 552 098 A offenbart ein Verfahren zum Herstellen eines Substrats. Auch aus der DE 36 13 543 C1 ist eine Schnellspanneinheit für eine Blasform bekannt

Aufgabe der vorliegenden Erfindung ist es daher eine Vorrichtung zum Umformen von Kunststoffbehältnissen mit mindestens einer Blasform bereitzustellen, die gegenüber den aus dem Stand der Technik bekannten Vorrichtungen ein vereinfachteres und schnelleres Auswechsein und/oder Fixieren der Blasform in der Vorrichtung ermöglicht.

Die zuvor genannte Aufgabe wird durch eine Vorrichtung nach Anspruch 1 zum Umformen von Kunststoffbehältnissen mit einer Blasform gelöst, wobei die Blasform zumindest aus einem ersten und einem zweiten Blasformteil besteht Die Vorrichtung weist wenigstens ein erstes und ein zweites Trägerelement zum Halten der Blasformteile auf, wobei die Trägerelemente mindestens in einer Ebene relativ zueinander bewegbar sind. Dies ist erforderlich, damit die Träger-elemente bzw. Blasformteile aus einer geschlossenen Konfiguration in eine geöffnete Konfiguration oder vice versa überführbar sind.

Bevorzugt stehen in einer geschlossenen Konfiguration die Blasformteile miteinander in Kontakt und bevorzugt sind in einer geöffneten Konfiguration die Blasformteile zumindest zeitweise getrennt voneinander angeordnet. Die Trägerelemente weisen jeweils einen Aufnahmebereich bzw. Haltebereich zum Aufnehmen bzw. Halten jeweils eines Blasformteils auf, wobei die Blasformteile in der geschlossenen Konfiguration mindestens einen Hohlraum zum Expandieren der Behältnisse ausbilden, der bevorzugt zumindest eine Öffnung zum Zuführen eines druckbeaufschlagten Fluides, insbesondere von Druckluft, ausweist. Erfindungsgemäß sind die Blasformteile miteinander magnetisch und lösbar koppelbar. Dies ist vorteilhaft, da durch eine magnetische Kopplung der Bedarf an mechanischen Komponenten verringert wird. Der Aufnahmebereich der Trägerelemente umgibt bevorzugt, aber nicht notwendigerweise ein Seitenteil der Blasform wenigstens abschnittsweise und bevorzugt vollständig.

In einer weiteren bevorzugten Ausführungsform der vorliegenden Erfindung ist mindestens eines der Blasformteile zumindest gegenüber einem Trägerelement in der Position fixierbar. Die Blasformteile können ebenfalls unabhängig von der Position der Trägerelemente eine miteinander gekoppelte, bevorzugt kontaktierende, Einheit bilden, wobei sie beispielsweise einfach und aufwandsarm zeitgleich transportierbar bzw. umpositionierbar sind. Ferner bieten diese Ausführungsvarianten den Vorteil, dass die einzelnen Blasformteile mit den einzelnen Trägerelementen koppelbar, bevorzugt zumindest teilweise kontaktierend, eine Einheit bzw. eine zueinander feste Einheit bilden und diese Einheit ohne mechanische Einrichtungen voraussetzend erzeugbar ist.

Daneben können Eingriffselemente wie Stifte oder dergleichen vorgesehen sein, welche in einem montierten Zustand des Blasformteils an dem Trägerelement eine Verschiebung des Blasformteils gegenüber dem Trägerelement in der Längsrichtung des Blasformteils verhindern.

In einer weiteren bevorzugten Ausführungsform der vorliegenden Erfindung weist zumindestens eines der Blasformteile, bevorzugt beide Blasformteile, und/oder zumindest eines der Trägerelemente, bevorzugt beide Trägerelemente, Magnetkomponenten auf, deren Feldstärke zumindest teilweise variierbar ist. Als variierbare Feldstärke wird in diesem Zusammenhang ebenfalls der Wechsel zwischen einem bestehenden und einem nicht bestehenden Magnetfeld verstanden. Diese Ausführungsvariante ist vorteilhaft, da aufgrund der magnetischen Kopplung der einzelnen Bauteile diese Kopplung einfach und schnell lösbar bzw. erzeugbar ist.

In einer weiteren bevorzugten Ausführungsform der vorliegenden Erfindung erstrecken sich die Blasformteile in einer Längsrichtung und mindestens eines der Blasformteile ist in einem mit dem Trägerelement gekoppelten Zustand gegenüber dem Trägerelement in mindestens einer ersten Rotationsrichtung um eine in Längsrichtung angeordnete reale oder virtuelle Achse drehbar. Die reale oder virtuelle Achse wird bevorzugt durch eine Mittelachse der Blasform ausgebildet. Diese Ausführungsform ist vorteilhaft, da die Blasform aufwandsarm von der Vorrichtung gelöst werden kann, ohne dass ein bestehendes Magnetfeld in der Feldstärke variiert werden muss. Ebenfalls wäre denkbar, dass die an den Trägerelementen angeordnete Magnetkomponenten auslenkbar angeordnet sind und somit aus dem Wirkbereich, in dem sie mit mindesten einem Blasformteil zusammenwirken, herausbewegbar sind. Bevorzugt erfolgt eine derartige Bewegung quer zu den Hauptfeldlinien.

In einer weiteren bevorzugten Ausführungsform der vorliegenden Erfindung wirkt das Blasformteil in einer zweiten Rotationsrichtung, die entgegen der ersten Rotationsrichtung orientiert ist formschlüssig mit einem bevorzugt an dem Trägerelement oder zwischen dem Blasformteil und dem Trägerelement ausgebildeten Anschlag zusammen. Das zumindest eine Blasformteil und das zumindest eine Trägerelement die zumindest zeitweise feldschlüssig zusammenwirkende magnetische Komponenten aufweisen, sind zumindest zeitweise teilweise in einem Kontaktzustand versetzt zueinander angeordnet und bewirken zumindest zeitweise, dass das Blasformteil zum definierten Positionieren mit einem Moment um die Längsachse beaufschlagt ist. Diese Ausführungsform ist vorteilhaft, da dadurch ein definiertes Positionieren der Blasformteile ermöglicht wird. Die magnetischen Kräfte, die zwischen den magnetischen Komponenten wirken, erzeugen ein Anpressen des Blasformteils an den Anschlag, wodurch z. B. Bewegungen der gesamten Vorrichtung nicht zu einem Fehlpositionieren oder Verrutschen des Blasformteils bzw. der Blasformteile führt, da zunächst die Anpresskraft überwunden werden muss.

In einer weiteren bevorzugten Ausführungsform der vorliegenden Erfindung sind das Blasformteil und das Trägerelement in einem Kontaktzustand stets zumindest formschlüssig miteinander verbunden, um eine Rotationsbewegung des Blasformteils gegenüber dem Trägerelement zu verhindern. Dies ist beispielsweise möglich, indem das zumindest eine Trägerelement und das korrespondierende Blasformteil in einer Form bzw. Gegenform ausgebildet sind, die ein Verdrehen und/oder Verschieben verhindert. Dies ist vorteilhaft, da auf diese Weise ein definiertes Anordnen eines bzw. aller Blasformteile ermöglicht wird.

In einer weiteren bevorzugten Ausführungsform der vorliegenden Erfindung sind das Blasformteil und das Trägerelement über mindestens ein Verbindungssegment zum Erzeugen einer formschlüssigen Verbindung, bevorzugt zwischen dem Blasformteil und dem Trägerelement, miteinander verbunden. Dies ist vorteilhaft, da das Trägerelement und das Blasformteil gegenüber anderen Einrichtungen zum Positionieren einfacher und somit kostengünstiger dimensionierbar sind.

In einer weiteren bevorzugten Ausführungsform der vorliegenden Erfindung ist mindestens ein Bodenblasformteil, das in einem Bodenbereich der Blasformteile mit diesen in Kontakt bringbar ist, gegenüber den Trägerelementen und/oder den Blasformteilen bewegbar und zum Bilden eines zumindest teilweise geschlossenen Raumes mit den Blasformteilen koppelbar, bevorzugt magnetisch koppelbar. Diese Ausführungsform ist vorteilhaft, da aufgrund der magnetischen Kopplung das Bodenblasformteil definiert an den Blasformteilen anordenbar ist und diese Kopplung ohne mechanische Komponenten und innerhalb kürzester Zeit erzeugbar bzw. lösbar ist. Es ist ferner denkbar, dass das Bodenblasformteil mittels einer Kolbenanordnung in Richtung der Blasformteile, d. h. bevorzugt in Höhenrichtung, bewegbar ist.

In einer weiteren bevorzugten Ausführungsform der vorliegenden Erfindung sind die magnetischen Komponenten aus einer Gruppe zumindest bestehend aus Elektromagneten zum beliebigen Ansteuern zumindest eines Magnetfeldes, Dauermagneten zum energieunabhängigen Bereitstellen mindestens eines Magnetfeldes und/oder magnetisch beaufschlagbaren Materialien zum Zusammenwirken mit dem mindestens einem Magnetfeld ausgewählt. Als magnetisch beaufschlagbare Materialien werden alle Materialien verstanden, die mit einem magnetisch wirkenden Feld derart zusammenwirken können, dass Kräfte übertragbar sind. Ein Beispiel hierfür ist Eisen. Diese Ausführungsform ist vorteilhaft, da beliebige Kombinationen der magnetisch beaufschlagbaren Materialien und/oder Magnetvarianten in beliebiger Anzahl vorgesehen werden können, wodurch Notfalleigenschaften verbessert werden, Energieeinsparungen erzielt werden können und Verarbeitungsprozesse beschleunigt werden.

In einer weiteren bevorzugten Ausführungsform der vorliegenden Erfindung ist die magnetische Kopplung (oder das magnetische Feld) zwischen den Blasformteilen und/oder einem Blasformteil und einem Trägerelement durch das Verdrehen von mindestens einem an mindestens einem Blasformteil oder einem Trägerelement vorgesehenen Dauermagneten das magnetische Feld kurzschließbar oder erzeugbar. Auf diese Weise kann eine magnetische Kopplung erzeugt oder gelöst werden

Der Dauermagnet ist bevorzugt fest mit dem Trägerelement und/oder dem Blasformteil verbunden und wird daher durch eine Drehung des Trägerelements und/oder des Blasformteils gegenüber dem Trägerelement oder dem Blasformteil, an dem er nicht angeordnet ist, relativ bewegt. Diese Ausführungsform ist vorteilhaft, da der Dauermagnet durch das Verdrehen in einen Bereich bewegbar ist, in dem er eine feldschlüssige Verbindung mit einem weiteren Magneten oder magnetisierbaren Material eingehen kann und dies ohne, dass zuvor Magnetfelder durch elektrische Beaufschlagung einzelner Bauteile erzeugt oder aufgelöst werden müssen. Es ist jedoch auch bevorzugt möglich, dass der Dauermagnet gegenüber dem Teil, an dem er angeordnet ist, drehbar oder allgemein beweglich ist. Auch wäre es möglich, dass der Dauermagnet auf das jeweils zu haltende Element zu bzw. von diesem weg bewegt werden kann, so dass eine Magnetkraft erhöht oder reduziert werden kann.

In einer weiteren bevorzugten Ausführungsform der vorliegenden Erfindung ist relativ zu mehreren Magneten ein bewegliches, insbesondere verschiebbares, Feldleitungselement vorgesehen, welches in wenigstens einer Position wenigstens zwei Magnete kurzschließt, d. h. die Feldlinien wenigstens zweier Magnete, insbesondere eines Nordpols und eines Südpols, kurzgeschlossen werden. Das verschiebbare Feldleitungselement kann in Form einer Blende ausgeführt sein, die bevorzugt mindestens ein Segment aufweist, das aus einem magnetisch beaufschlagbaren Material besteht und aus einem Feldbereich eines ersten Magneten in den Feldbereich eines zweiten Magneten überführbar ist. Dabei ist denkbar, dass das Segment des Feldleitungselements die jeweiligen Magnete berührt. Ebenfalls ist vorstellbar, dass das Feldleitungselement bzw. das Segment lediglich in einem Bereich der Feldlinien geführt wird und die Magnete nicht berührt. Das Feldleitungselement ist zumindest teilweise aus nicht magnetisierbaren Materialien wie z. B. Kunststoff, Glas, Keramik, Glasfasern, Karbon gebildet, die Zwischensegmente ausbilden, die zwischen den magnetisch beaufschlagbaren Segmenten angeordnet sind. Bevorzugt ist das Feldleitungselement an demselben Körper ausgebildet, an dem auch die Magnete ausgebildet sind, mit denen es zusammenwirken soll.

In einer weiteren denkbaren Ausführungsform weist das Feldleitungselement bevorzugt eine Vielzahl an magnetisch beaufschlagbaren Elementen bzw. Segmente auf, die voneinander durch nicht magnetisch beaufschlagte Bereiche getrennt sind. Diese Ausführungsform ist vorteilhaft, da durch eine einfache Relativbewegung des Feldleitungselementes gegenüber den Magneten das Magnetfeld erzeugbar bzw. auflösbar ist. Hierbei wird unter auflösbar verstanden, dass sich das Magnetfeld im Wesentlichen zwischen dem Magnetfeldern und dem Leitungselement befindet bzw. dazwischen ausgerichtet ist.

In einer weiteren bevorzugten Ausführungsform der vorliegenden Erfindung ist die magnetische Kopplung zwischen den Blasformteilen und/oder einem Blasformteil und einem Trägerelement durch die Endmagnetisierung oder Magnetisierung mindestens eines Dauermagneten aufhebbar oder erzeugbar. Dies ist vorteilhaft, da im Falle einer unterbrochenen Energiezufuhr die Kopplung zwischen dem Dauermagneten und dem damit gekoppelten Element stets aktiv ist.

In einer weiteren bevorzugten Ausführungsform der vorliegenden Erfindung ist die magnetische Kopplung zwischen den Blasformteilen und/oder einem Blasformteil und einem Trägerelement durch die Ansteuerung von wenigstens einem Elektromagneten, bevorzugt mindestens einem an dem Blasformteil und/oder mindestens einem an dem Trägerelement vorgesehenen Elektromagneten, veränderbar, bevorzugt erzeugbar oder aufhebbar. Diese Ausführungsform ist vorteilhaft, da die Feldstärke und somit die Kraft zwischen den einzelnen Komponenten (Blasformteil, Trägerelement) beliebig einstellbar ist. Weiterhin ist vorteilhaft, dass die Kopplung in Abhängigkeit eines Bearbeitungsprozesses zeitnah und/oder betriebsbedingt veränderbar ist. Zudem lässt sich eine derartig erzeugte Kopplung einfach und schnell variieren bzw. verstärken, abschwächen oder auflösen.

In einer weiteren bevorzugten Ausführungsform der vorliegenden Erfindung ist mindestens eine Sensoreinrichtung zum Überwachen der durch die magnetischen Komponenten erzeugten Felder und deren Feldstärken vorgesehen. Dies ist vorteilhaft, da durch eine derartige Sensoreinrichtung erfasste Felder bzw. Feldstärken stets mit Standardwerten bzw. Messwerten abgleichbar sind und somit die einzelnen Felder bzw. Feldstärken, beliebig einstellbar und/oder überprüfbar sind.

An dieser Stelle sei noch darauf hingewiesen, dass sämtliche in den Anmeldungsunterlagen offenbarten Merkmale einzeln oder in Kombination miteinander gattungsgemäße oder aus dem Stand der Technik bekannte Blasformvorrichtungen vorteilhaft weiterentwickeln.

Weitere Vorteile, Ziele und Eigenschaften der vorliegenden Erfindung werden anhand nachfolgender Beschreibung anliegender Zeichnungen erläutert, in welchen beispielhaft Blasvorrichtungen für die Herstellung von Kunststoffbehältnissen dargestellt sind. Bauteile der Blasvorrichtung, welche in den Figuren wenigstens im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.

Darin zeigen:
- Fig. 1: Eine Draufsicht auf eine Blasformanordnung;
- Fig. 2: einen Ausschnitt einer Blasformanordnung;
- Fig. 3a: ein Beispiel für einen Magnetschalter zum Befestigen eines Blasformteils an einem Gehäuse einer Blasformanordnung in einem ersten Zustand;
- Fig. 3b: ein Beispiel für einen Magnetschalter zum Befestigen eines Blasformteils an einem Gehäuse einer Blasformanordnung in einem zweiten Zustand;
- Fig. 4: eine dreidimensionale Darstellung einer Anordnung der Bodenformen bzw. Bodenträger einer Blasformanordnung;
- Fig. 5: eine prinzipielle Darstellung eines weiteren Magnetschalters; und
- Fig. 6: eine weitere prinzipielle Darstellung eines weiteren Magnetschalters.

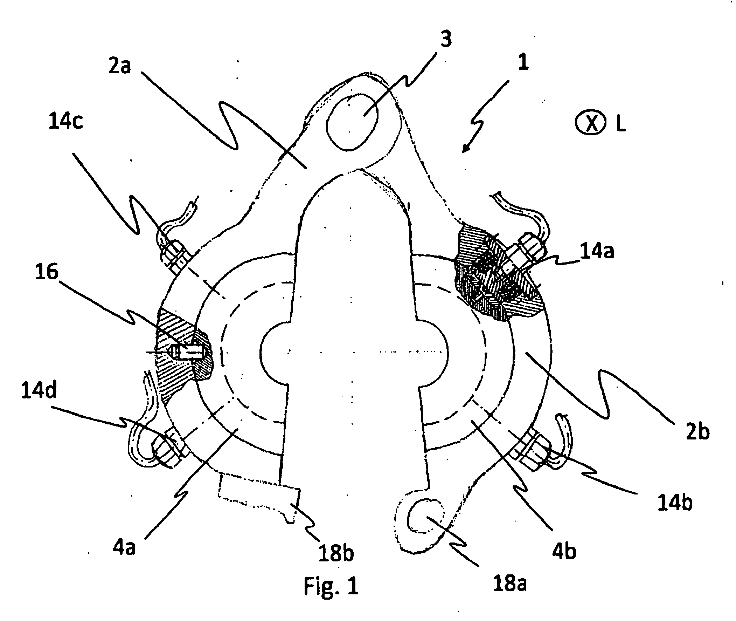

In Fig. 1 ist eine zweidimensionale Darstellung einer Blasformanordnung 1, die ein Gehäuse zumindest bestehend aus den Gehäuseteilen 2a und 2b aufweist, gezeigt. Die Gehäuseteile 2a und 2b sind an einem Gelenk 3 rotatorisch zueinander bewegbar und bilden Trägerelemente 2a, 2b aus. Hierbei ist vorstellbar, dass eines der Gehäuseteile 2a, 2b raumfest angeordnet ist und lediglich das zweite Gehäuseteil 2b gegenüber dem ersten Gehäuseteil 2a rotatorisch bewegt wird. Die Gehäuseteile 2a und 2b dienen zur Aufnahme von Blasformteilen 4a, 4b. Die Blasformteile 4a, 4b sind in den jeweiligen Gehäuseteilen 2a, 2b mittels Magnetspulen 14a, 14b, 14c, 14d fixierbar. Durch eine Betätigung, d. h. Aktivierung der Magnetspulen 14a, 14b, 14c, 14d erfolgt ein Anziehen der bevorzugt zumindest teilweise magnetisierbaren Blasformteile 4a, 4b derart, dass zwischen den Gehäuseteilen 2a, 2b und den Blasformteilen 4a, 4b eine Anpresskraft erzeugt wird. Aufgrund dieser Anpresskraft ist der Zwischenbereich zwischen den Trägerelementen 2a, 2b und den Blasformteilen 4a, 4b sehr klein bzw. lediglich ein Kontaktbereich. Die Begriffe Trägerelemente und Gehäuseteile werden im Rahmen dieser Beschreibung nebeneinander verwendet.

In der in Fig. 1 dargestellten Ausführungsvariante sind die Blasformteile 4a, 4b und die Aufnahmebereiche der Gehäuseteile 2a, 2b im Wesentlichen halbrund ausgeführt, wodurch eine Verdrehung der Blasformteile 4a, 4b gegenüber den Gehäuseteilen 2a, 2b vorstellbar ist. Um eine derartige Verdrehung zu vermeiden, werden beispielsweise Zylinderstifte 16 in den Gehäuseteilen 2a, 2b und/oder an den Blasformteilen 4a, 4b angeordnet, wodurch ein Formschluss zwischen den Blasformteilen 4a, 4b und den Gehäuseteilen 2a, 2b herstellbar ist.

Die Magnetspulen 14a, 14b, 14c, 14d sind bevorzugt in einem geöffneten Zustand der Blasformanordnung 1 bzw. in deren Arbeitsbetrieb aktiviert, d. h. sie fixieren die Blasformteile 4a, 4b zunächst gegen die Entnahme bzw. das Herausfallen aus den Gehäuseteilen 2a, 2b. In einem geschlossenen Zustand der Blasformanordnung 1, in dem die Verschlusselemente 18a und 18b zusammenwirken und sich die Blasformteile 4a, 4b bevorzugt berühren, ist es vorstellbar, dass die Magnetspulen 14a, 14b, 14c, 14d abgeschaltet sind. Bevorzugt sind die Magnetspulen 14a, 14b, 14c, 14d jedoch solange aktiviert, wie die Blasformteile 4a, 4b in der Blasformanordnung 1 gehalten werden sollen.

Es ist ebenfalls denkbar, dass entgegen der in Fig. 1 gezeigten Darstellung die Blasformteile 4a, 4b jeweils lediglich mit einer Magnetspule 14a bzw. einer Vielzahl an Magnetspulen 14a, 14b, 14c, 14d gehalten bzw. befestigt werden. Weiterhin ist denkbar, dass das Blasformteil 4a, 4b nicht nur ein magnetisierbares Gegenstück zu den Magnetspulen 14a, 14b, 14c, 14d darstellt, sondern ebenfalls als Magnet ausgebildet ist und somit mit den Magnetspulen 14a, 14b, 14c, 14d ein Magnetpaar bildet.

Eine weitere bevorzugte Ausführungsvariante zur Fixierung der einzelnen Blasformteile 4a, 4b in den Gehäuseteilen 2a, 2b ist beispielsweise mittels Elektro-Dauermagneten vorstellbar. Die Magnetkraft wird dabei von Dauermagneten erzeugt, welche durch Stromimpulse magnetisiert und/oder entmagnetisiert werden. Diese Ausführungsform bietet eine hohe Funktionssicherheit bei Stromausfall, da die Entmagnetisierung aufgehoben wird und die Blasformteile mit dem Trägerelementen verbunden sind. Die Stromimpulse zum Magnetisieren und Entmagnetisieren können über eine Kontaktstelle auf die Vorrichtung bzw. Magnetanordnung übertragen werden, die ortsfest angeordnet ist, und alle daran vorbeigeführten Einrichtungen, insbesondere die Gehäuseteile 2a, 2b und/oder die Blasformteile 4a, 4b kontaktiert. Generell kann zur Kontrolle bzw. Erhöhung der Betriebssicherheit durch Strommessung die Haftkraft bzw. Anpresskraft der Elektromagnete überprüft werden.

Die Bezugszeichen 18a, 18b beziehen sich auf einen Verschluss bzw. einen Verriegelungsmechanismus, der die Trägerelemente - insbesondere während des Blasvorgangs - verriegelt. Das Bezugszeichen L kennzeichnet die Längsrichtung der Blasform, die sich hier senkrecht zu der Figurenebene erstreckt.

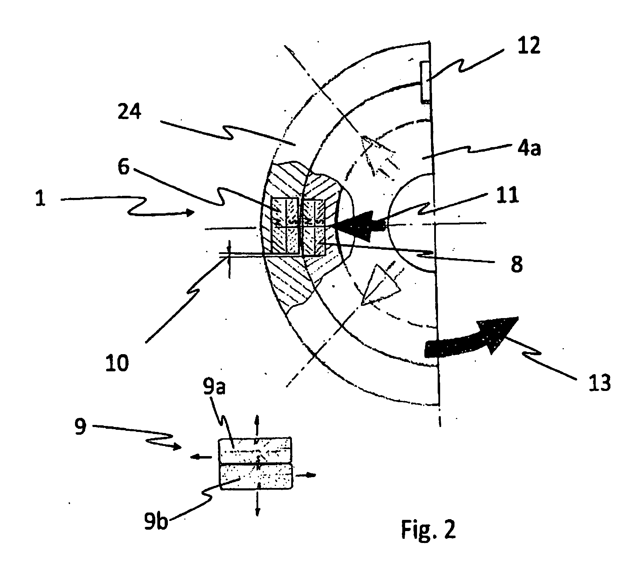

In Fig. 2 ist ein Ausschnitt einer Blasformanordnung 1 gezeigt. Diese Blasformanordnung 1 weist ein Gehäuseteil 2a und ein damit in Kontakt stehendes Blasformteil 4a auf. Das Gehäuseteil 2a und/oder das Blasformteil 4a sind magnetisch bzw. magnetisierbar ausgestaltet. In der in Fig. 2 gezeigten Darstellung weist das Gehäuseteil 2a einen ersten Magnet 6 und das Blasformteil 4a einen zweiten Magnet 8 auf. Die beiden Magnete 6, 8 sind bevorzugt derart steuerbar bzw. betätigbar, d. h. deren feldschlüssiges Zusammenwirken ist derart erzeugbar bzw. aufhebbar, dass in einem aktivierten Zustand zwischen dem Gehäuseteil 2a und dem Blasformteil 4a ein Kraftschluss bzw. Feldschluss aufbaubar ist und in einem nicht aktivierten Zustand, d. h. bevorzugt beim Demontieren der Blasform, sich das Blasformteil 4a von dem Gehäuseteil 2a löst.

In der in Fig. 2 gezeigten Darstellung ist durch das Bezugszeichen 10 ein Abstand der Außenkanten der Magnetsegmente 6, 8 des Gehäuseteils 2a und des Blasformteils 4a gegenüber einander dargestellt. Der Abstand 10 ermöglicht es beim Zusammenwirken des ersten Magneten 6 und des zweiten Magneten 8 und somit der Aufbringung einer Anpresskraft in Anpressrichtung 11 eine Verdrehung des Blasformteils 4a entgegen der Richtung 13 zu bewirken. Eine solche Verdrehung des Blasformteils 4a führt dazu, dass das Blasformteil 4a gegen einen Anschlag 12, der bevorzugt fest mit dem Gehäuseteil 2a verbunden ist, gepresst wird. Hierdurch ist eine äußerst einfache und präzise Positionierung des Blasformteils 4a in dem Gehäuseteil 2a möglich. Es besteht ebenfalls die Möglichkeit, dass eine Ausrichtung der Blasformteile bzw. eines Blasformteils 4b im geschlossenen Zustand der Blasformanordnung 1 durch gezieltes entmagnetisieren des Blasformteils 4b erfolgt.

Mit dem Bezugszeichen 9 ist eine Magnetanordnung bestehend aus einem oberen und einem unteren Magneten 9a, 9b gekennzeichnet, die im Wesentlichen den Magneten 6, 8 entsprechen. Aus der Darstellung lässt sich erkennen, dass bei übereinanderliegenden Magneten eine Verschiebung der Magnete 9a, 9b zueinander die Überwindung unterschiedlich hoher Gegenkräfte (durch Pfeile gekennzeichnet) erfordert.

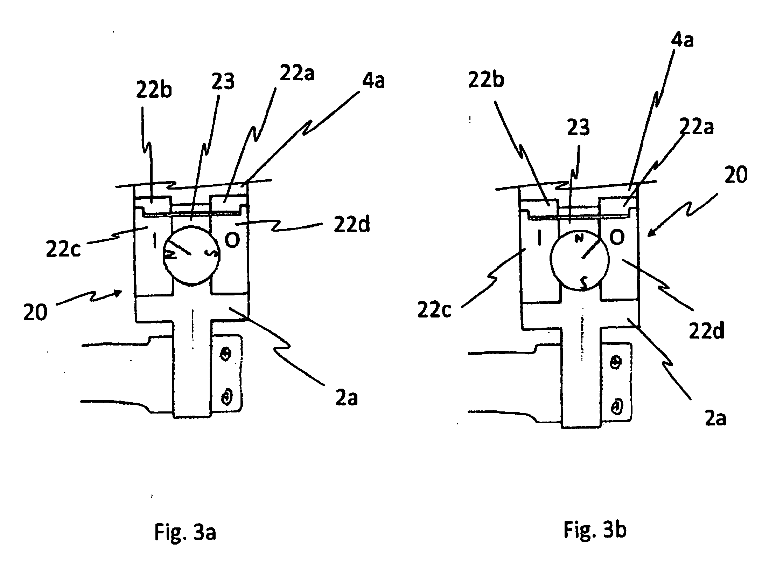

In der Fig. 3a ist ein manuell betätigbarer Magnetschalter zum Erzeugen eines Feldschlusses zwischen einem Gehäuseteil 2a und einem nur ausschnittsweise dargestellten Blasformteil 4a abgebildet. In der in Fig. 3a gezeigten Darstellung ist ein Magnetschluss bzw. Feldschluss zwischen dem Gehäuseteil 2a und dem Blasformteil 4a hergestellt. Die Herstellung des Magnetschlusses zwischen dem Gehäuseteil 2a und dem Blasformteil 4a erfolgt hierbei durch die getrennt voneinander erfolgende Magnetbeaufschlagung bzw. Feldbeaufschlagung des Eisenelements 22c mit dem Nordpol N des Magneten und der Magnetbeaufschlagung bzw. der Feldbeaufschlagung des Eisenelements 22d durch den Südpol S. In diesem Fall wird eine Kopplung zwischen den Bereichen 22c und 22b bzw. 22d und 22a bewirkt das mit dem Bezugszeichen 22 gekennzeichnete Element ist ein Aluminiumelement und dient zum Entkoppeln der Bereiche 22b, 22c und 22a, 22d voneinander.

In Fig. 3b ist ein entkoppelter Zustand dargestellt, in dem kein Magnetschluss zwischen dem Gehäuseteil 2a und dem Blasformteil 4a besteht. Die Elemente 22c und 22d schließen jeweils den Nordpol N mit dem Südpol S des Magneten kurz, wodurch keine Erstreckung eines Magnetfeldes auf die Elemente 22a und 22b erfolgt.

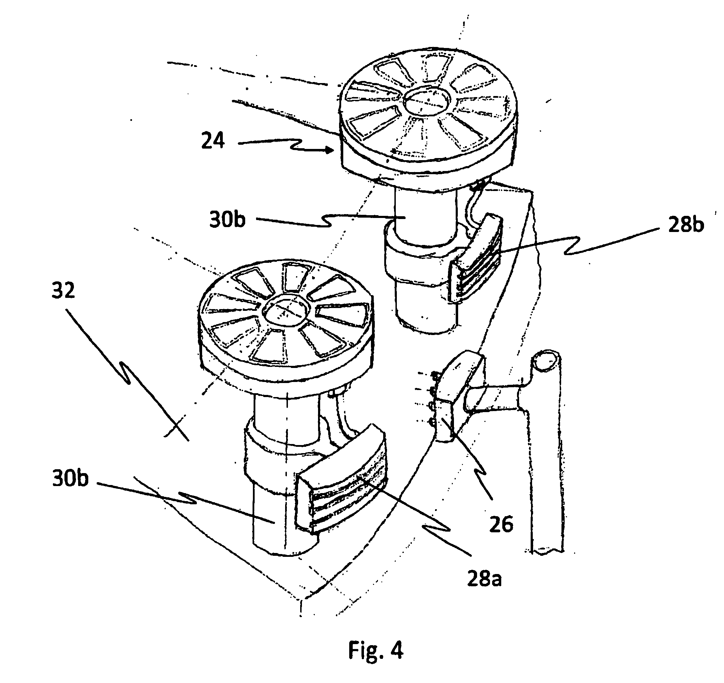

In Fig. 4 ist eine dreidimensionale Darstellung zweier Bodenformen 24 der Blasformanordnung 1 gezeigt. Die Bodenform 24 weist bevorzugt Stromabnehmer 28a, 28b auf, die mit einer ortsfesten Stromzuführung 26 zusammenwirken können. Das Zusammenwirken der Stromabnehmer 28a, 28b mit der Stromzuführung 26 erfolgt durch ein Rotieren der Bodenform 24 auf einer Kreisbahn. Es ist hierbei jedoch ebenfalls denkbar, dass die Bodenformen 24 raumfest angeordnet sind und mit Stromleitungen verbunden sind. Ferner ist denkbar, dass die Bodenformen 24 durch das Zusammenwirken mit den Gehäuseteilen 2a, 2b mit Strom beaufschlagt werden. Die Bodenformen 24 sind bevorzugt mittels Hydraulikzylindern 30a, 30b gegenüber einem Drehteil 32 angeordnet und in ihrer Höhe, d. h. in Blasformrichtung auslenkbar und somit mit den Blasformteilen 4a, 4b (nicht gezeigt) zum Bilden eines Innenraums einer Blasform koppelbar.

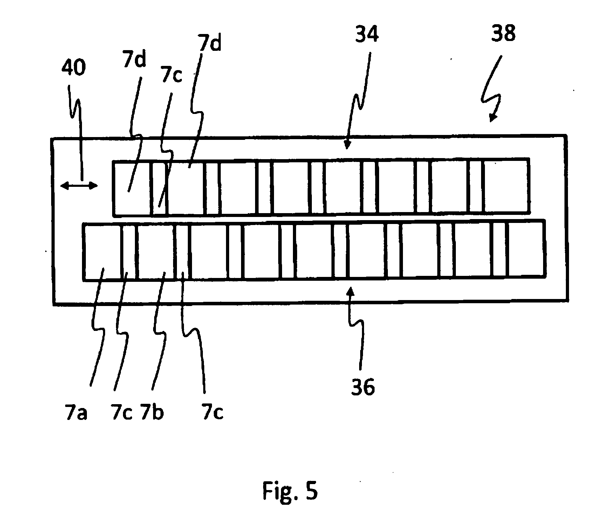

In Fig. 5 ist eine weitere Magnetanordnung 38 gezeigt, mittels derer eine magnetische Kopplung zwischen einem Gehäuseteil 2a und einem Blasformteil 4a (beide nicht gezeigt) einstellbar ist. Bevorzugt sind die Elemente 7a und 7b als Dauermagneten unterschiedlicher Polarität ausgebildet und durch ein magnetisch isolierendes Element 7c voneinander beabstandet. Eine derartige Anordnung kann in abwechselnder Reihenfolge in Form einer festen Anordnung 36 vorgesehen sein, wobei gegenüber der festen Anordnung 36 ein bewegliches Element 34 vorsehbar ist. Das bewegliche Element 34 besteht hierbei bevorzugt aus magnetisierbaren Elementen 7d und dazwischen angeordneten und bevorzugt volumenmäßig sowie querschnittsmäßig reduzierten Isolationselementen 7c.

Durch das Bezugszeichen 40 wird ein mögliches Verschieben des beweglichen Elementes 34 angezeigt, wodurch die magnetisierbaren Elemente 7d zumindest teilweise über bzw. gegenüber zweier unterschiedlich magnetisierter Dauermagneten angeordnet werden. In einer zumindest teilweise überlappenden Anordnung (in Fig. 5 gezeigt), in der ein magnetisierbares Element 7d bzw. magnetisierbares Material zumindest teilweise zwei unterschiedlich magnetisierte Magnetelemente 7a, 7b überlagert, werden deren Magnetfelder kurzgeschlossen.

Das bewegliche Element 34 ist in Richtung des Pfeiles 40 derart bewegbar, dass die magnetisierbaren Elemente 7d aus einem überlagernden Zustand, in dem sie, wie zuvor beschrieben, unterschiedlich gepolte Magnete 7a, 7b miteinander koppeln, in einen entkoppelten Zustand, d. h. lediglich einen Magneten 7a oder 7b überlagern, überführbar sind. Dabei könnten beispielsweise die Magneten in einem Trägerelement angeordnet sein und das bewegliche Element zwischen diesen Magneten und einer Blasform, die aus einem magnetisierbaren Material besteht. Das bewegliche Element könnte dabei in einer Schienenführung, welche bevorzugt ebenfalls an dem Trägerelement angeordnet ist, angeordnet sein.

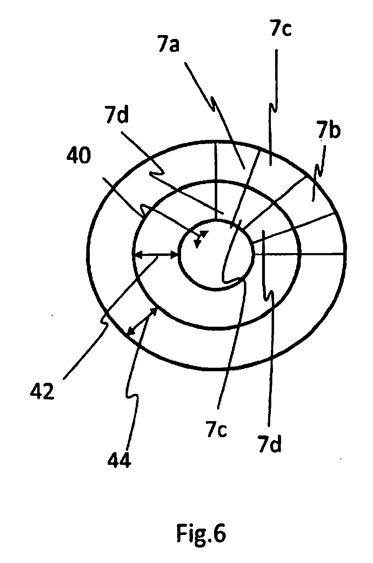

In Fig. 6 ist die in Fig. 5 dargestellte Ausführungsform in Form einer runden Anordnung dargestellt. Daraus ist ersichtlich, dass entweder der innere Ring und/oder der äußere Ring in Richtung des Bezugszeichens 40 gegenüber dem anderen Ring verdrehbar bzw. bewegbar ist. Durch ein Verdrehen bzw. Bewegen der Ringsegmente zueinander erfolgt gemäß dem bezüglich Fig. 5 beschriebenen Prinzip eine Kopplung bzw. Entkopplung eines magnetischen Feldes. Mit den Bezugszeichen 42 und 44 wird angegeben, dass die einzelnen Ringelemente unterschiedliche Dicken bzw. variierende Dicken aufweisen können.

Die hier beschriebenen magnetischen Kopplungsmechanismen können in besonders vorteilhafter Ausgestaltung auch auf die Kopplung zweier Blasformteile aneinander angewandt werden. So kann es vorteilhaft sein, wenn zur Montage und Demontage der Blasformen an den Blasformträgern die beiden Blasformseitenteile miteinander magnetisch in Eingriff stehen. In diesem Fall könnte auch noch das Bodenteil der Blasform formschlüssig an den Seitenteilen angeordnet sein und so die Blasform zur Demontage in einem zusammengesetzten Zustand aus einer Blasmaschine entnommen werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Blasformanordnung
- 2a, 2b: Gehäuseteile, Trägerelement
- 3: Gelenk
- 4a, 4b: Blasformteil
- 6: erster Magnet
- 7a: Magnet Nordpol
- 7b: Magnet Südpol
- 7c: Isolator
- 7d: magnetisierbares Material
- 8: zweiter Magnet
- 9: Magnetanordnung
- 9a, 9b: oberer, unterer Magnet
- 10: Abstand
- 11: Anpressrichtung
- 12: Anschlag
- 13: Löserichtung
- 14a, 14b, 14c, 14d: Magnetspule
- 16: Zylinderstift
- 18a, 18b: Verschluss
- 20: Schalter
- 22a, 22b, 22c, 22d: Eisenelement
- 23: Aluminiumelement
- 24: Bodenform
- 26: Stromzuführung
- 28a, 28b: Stromabnehmer
- 30a, 30b: Hydraulikzylinder
- 32: Drehteil
- 34: bewegliches Feldleitungselement
- 36: feste Anordnung
- 38: Magnetanordnung
- 40: Bewegungsrichtung
- 42: radiale Ausdehnung des ersten kreisförmigen Segments
- 44: radiale Ausdehnung des zweiten kreisförmigen Segments

- N: Nordpol
- S: Südpol
- L: Längsrichtung

## Patentansprüche

1. Vorrichtung zum Umformen von Kunststoffbehältnissen (1) mit einer Blasform, wobei die Blasform zumindest aus einem ersten und einem zweiten Blasformteil (4a, 4b) besteht,
mit wenigstens einem ersten und einem zweiten Trägerelement (2a, 2b) zum Halten der Blasformteile (4a, 4b), wobei die Trägerelemente (2a, 2b) mindestens in einer Ebene relativ zueinander bewegbar sind, um zumindest aus einer geschlossenen Konfiguration in eine geöffneten Konfiguration überführbar zu sein, und wobei die Trägerelemente (2a, 2b) jeweils einen Aufnahmebereich zum Aufnehmen jeweils eines Blasformteils (4a, 4b) aufweisen, wobei die Blasformteile (4a, 4b) in der geschlossenen Konfiguration mindestens einen Hohlraum zum Expandieren der Behältnisse ausbilden.
**dadurch gekennzeichnet, dass**
die Blasformteile (4a, 4b) miteinander magnetisch und lösbar koppelbar sind.

2. Vorrichtung nach Anspruch 1,
**dadurch gekennzeichnet, dass**
die Blasformteile (4a, 4b) relativ zueinander magnetisch in ihrer Position fixierbar sind und/oder mindestens eines der Blasformteile (4a, 4b) relativ zu mindestens einem Trägerelement (2a, 2b) in der Position fixierbar ist.

3. Vorrichtung nach Anspruch 1 oder 2,
**dadurch gekennzeichnet, dass**
zumindest eines der Blasformteile (4a, 4b) Magnetkomponenten (6, 8) aufweist, deren Feldstärke variierbar ist.

4. Vorrichtung nach Anspruch 1 oder 2,
**dadurch gekennzeichnet, dass**
zumindest eines der Trägerelemente (2a, 2b) Magnetkomponenten (6, 8) aufweist, deren Feldstärke variierbar ist.

5. Vorrichtung nach mindestens einem der vorangegangenen Ansprüche,
**dadurch gekennzeichnet, dass**
sich die Blasformteile (4a, 4b) in einer Längsrichtung (L) erstrecken und in einem mit dem Trägerelement (2a, 2b) gekoppelten Zustand gegenüber dem Trägerelement (2a, 2b) in mindestens einer ersten Rotationsrichtung um eine in Längsrichtung (L) angeordnete reale oder virtuelle Achse drehbar sind.

6. Vorrichtung nach Anspruch 4
**dadurch gekennzeichnet, dass**
das Blasformteil (4a, 4b) in einer zweiten Rotationsrichtung (13), die entgegen der ersten Rotationsrichtung orientiert ist, formschlüssig mit einem Anschlag (12) zusammenwirkt.

7. Vorrichtung nach Anspruch 5
**dadurch gekennzeichnet**,
zumindest ein Blasformteil (4a, 4b) und zumindest ein Trägerelement (2a, 2b) feldschlüssig zusammenwirkende magnetische Komponenten (6, 8) aufweisen, die in einem Kontaktzustand zumindest versetzt zueinander angeordnet sind und bewirken,
dass das Blasformteil (4a, 4b) zum definierten Positionieren mit einem Moment in der zweiten Rotationsrichtung (13) beaufschlagt ist.

8. Vorrichtung nach einem der Ansprüche 1 bis 3
**dadurch gekennzeichnet, dass**
das Blasformteil (4a, 4b) und das Trägerelement (2a, 2c) in einem Kontaktzustand stets formschlüssig verbunden sind, um eine Rotationsbewegung des Blasformteils (4a, 4b) gegenüber dem Trägerelement (2a, 2b) zu verhindern.

9. Vorrichtung nach mindestens einem der vorangegangenen Ansprüche 1 bis 7,
**gekennzeichnet durch**,
mindestens ein Bodenblasformteil (24), das in einem Bodenbereich der Blasformteile (4a, 4b) mit diesen in Kontakt bringbar ist, gegenüber den Trägerelementen (2a, 2b) und/oder den Blasformteilen (4a, 4b) bewegbar ist und zum Bilden eines zumindest teilweise geschlossenen Raumes mit den Blasformteilen (4a, 4b) magnetisch koppelbar ist.

10. Vorrichtung nach mindestens einem der vorangegangenen Ansprüche,
**dadurch gekennzeichnet, dass**
die magnetischen Komponenten (6, 8) aus einer Gruppe zumindest bestehend aus Elektromagneten, Dauermagneten und/oder magnetisch beaufschlagbare Materialien zum Zusammenwirken mit dem mindestens einen Magnetfeld ausgewählt sind.

11. Vorrichtung nach mindestens einem der zuvor genannten Ansprüche,
**dadurch gekennzeichnet, dass**
die magnetische Kopplung zwischen den Blasformteilen (4a, 4b) und/oder einem Blasformteil (4a, 4b) und einem Trägerelement (2a, 2b) durch Verdrehen von mindestens einem an mindestens einem Blasformteil (4a, 4b) und/ oder einem Trägerelement (2a, 2b) vorgesehenen Dauermagneten kurzschließbar oder erzeugbar ist.

12. Vorrichtung nach Anspruch 10,
**dadurch gekennzeichnet, dass**
relativbeweglich zu mindestens zwei Magneten (7a, 7b) ein bewegliches Feldleitungselement (34) vorgesehen ist, welches die wenigstens zwei Magnete (7a, 7b) in einer Position kurzschließt.

13. Vorrichtung nach mindestens einem der vorangegangenen Ansprüche,
**dadurch gekennzeichnet, dass**
die magnetische Kopplung zwischen den Blasformteilen (4a, 4b) und/oder einem Blasformteil (4a, 4b) und einem Trägerelement (2a, 2b) durch die Entmagnetisierung oder Magnetisierung mindestens eines Dauermagneten aufhebbar oder erzeugbar ist.

14. Vorrichtung nach mindestens einem der Ansprüche 1 bis 12,
**dadurch gekennzeichnet, dass**
die magnetische Kopplung zwischen den Blasformteilen (4a, 4b) und/oder einem Blasformteil (4a, 4b) und einem Trägerelement (2a, 2b) durch die Ansteuerung von mindestens einem Elektromagneten (14a, 14b, 14c, 14d), bevorzugt mindestens einem an dem Blasformteil (4a, 4b) und mindestens einem an dem Trägerelement (2a, 2b) vorgesehenen Elektromagneten (14a, 14b, 14c, 14d), veränderbar. bevorzugt erzeugbar oder aufhebbar, ist.

15. Vorrichtung nach mindestens einem der zuvor genannten Ansprüche,
**dadurch gekennzeichnet, dass**
mindestens eine Sensoreinrichtung zum Überwachen der durch die magnetischen Komponenten erzeugten Feldstärken vorgesehen ist.

## Claims

1. An apparatus for the shaping of plastics-material containers (1) with a blow mould, wherein the blow mould comprises at least one first and one second blow-mould part (4a, 4b), with at least one first and one second carrier element (2a, 2b) for holding the blow-mould parts (4a, 4b), wherein the carrier elements (2a, 2b) are movable relative to one another at least in one plane, in order to be transferred at least from a closed configuration into an opened configuration, and wherein the carrier elements (2a, 2b) have in each case a receiving area for receiving one blow-mould part (4a, 4b) in each case, wherein the blow-mould parts (4a, 4b) in the closed configuration form at least one cavity for the expansion of the containers, **characterized in that** the blow-mould parts (4a, 4b) are capable of being coupled in a magnetic and releasable manner to each other.

2. An apparatus according to claim 1, **characterized in that** the blow-mould parts (4a, 4b) are capable of being fixed magnetically in their position relative to each other and/or at least one of the blow-mould parts (4a, 4b) is capable of being fixed in position relative to at least one carrier element (2a, 2b).

3. An apparatus according to claim 1 or 2, **characterized in that** at least one of the blow-mould parts (4a, 4b) has magnet components (6, 8) of which the field strength is variable.

4. An apparatus according to claim 1 or 2, **characterised in that** at least one of the carrier elements (2a, 2b) has magnetic components, of which the field strength is variable.

5. An apparatus according to at least one of the preceding claims, **characterized in that** the blow-mould parts (4a, 4b) extend in a longitudinal direction (L) and are rotatable, in a state coupled to the carrier element (2a, 2b), with respect to the carrier element (2a, 2b) in at least one first direction of rotation about a real or virtual axis situated in the longitudinal direction (L).

6. An apparatus according to claim 4, **characterized in that** the blow-mould part (4a, 4b) co-operates in a positively locking manner with a stop (12) in a second direction of rotation (13) which is orientated contrary to the first direction of rotation.

7. An apparatus according to claim 5, **characterized in that** at least one blow-mould part (4a, 4b) and at least one carrier element (2a, 2b) have magnetic components (6, 8) which cooperate with field locking and which are arranged offset from each other in a state of contact and cause the blow-mould part (4a, 4b) to be acted upon with a moment in the second direction of rotation (13) for positioning in a defined manner.

8. An apparatus according to any one of claims 1 to 3, **characterized in that** the blow-mould part (4a, 4b) and the carrier element (2a, 2b) in a state of contact are always connected to each other in a positively locking manner in order to prevent a rotational movement of the blow-mould part (4a, 4b) with respect to the carrier element (2a, 2b).

9. An apparatus according to at least one of the preceding claims 1 to 7, **characterized by** at least one base blow-mould part (24), which is capable of being brought into contact with the blow-mould parts (4a, 4b) in a base region of said blow-mould parts (4a, 4b), is movable with respect to the carrier elements (2a, 2b) and/or the blow-mould parts (4a, 4b) and is capable of being coupled magnetically to the blow-mould parts (4a, 4b) in order to form an at least partially closed space.

10. An apparatus according to at least one of the preceding claims, **characterized in that** the magnetic components (6, 8) are selected from a group at least comprising electromagnets, permanent magnets and/or materials capable of being acted upon magnetically for co-operating with the least one magnetic field.

11. An apparatus according to at least one of the aforesaid claims, **characterized in that** the magnetic coupling between the blow-mould parts (4a, 4b) and/or a blow-mould part (4a, 4b) and a carrier element (2a, 2b) is capable of being short-circuited or formed by the turning of at least one permanent magnet provided on at least one blow-mould part (4a, 4b) and/or one carrier element (2a, 2b).

12. An apparatus according to claim 10, **characterized in that** a movable field conducting element (34), which in one position short-circuits at least two magnets (7a, 7b), is provided in a movable manner relative to the at least two magnets (7a, 7b).

13. An apparatus according to at least one of the preceding claims, **characterized in that** the magnetic coupling between the blow-mould parts (4a, 4b) and/or a blow-mould part (4a, 4b) and a carrier element (2a, 2b) is capable of being discontinued or produced by the demagnetization or magnetization of at least one permanent magnet.

14. An apparatus according to at least one of claims 1 to 12, **characterized in that** the magnetic coupling between the blow-mould parts (4a, 4b) and/or a blow-mould part (4a, 4b) and a carrier element (2a, 2b) is capable of being altered, and preferably produced or discontinued, by the actuation of at least one electromagnet (14a, 14b, 14c, 14d), preferably at least one electromagnet (14a, 14b, 14c, 14d) provided on the blow-mould part (4a, 4b) and at least one electromagnet (14a, 14b, 14c, 14d) provided on the carrier element (2a, 2b).

15. An apparatus according to at least one of the aforesaid claims, **characterized in that** at least one sensor device is provided for monitoring the field strengths produced by the magnetic components.

## Revendications

1. Dispositif pour le formage de récipients en matière plastique (1), avec un moule finisseur, ledit moule finisseur étant composé au moins d'une première et d'une deuxième partie de moule finisseur (4a, 4b), avec au moins un premier et un deuxième élément de support (2a, 2b) pour le maintien des parties de moule finisseur (4a, 4b), les éléments de support (2a, 2b) étant déplaçable l'un par rapport à l'autre au moins dans un plan, pour pouvoir au moins passer d'une configuration fermée à une configuration ouverte, et les éléments de support (2a, 2b) présentant respectivement une zone de réception pour le logement d'une partie de moule finisseur (4a, 4b) correspondante, les parties de moule finisseur (4a, 4b) formant dans la configuration fermée au moins une cavité permettant l'expansion des récipients,
**caractérisé en ce que**
les parties de moule finisseur (4a, 4b) peuvent être accouplées ensemble magnétiquement et de manière amovible.

2. Dispositif selon la revendication 1,
**caractérisé en ce que**
les positions des parties de moule finisseur (4a, 4b) peuvent être magnétiquement fixées l'une par rapport à l'autre, et/ou **en ce que** la position d'au moins une des parties de moule finisseur (4a, 4b) peut être fixée par rapport à au moins un élément de support (2a, 2b).

3. Dispositif selon la revendication 1 ou la revendication 2,
**caractérisé**
**en ce qu'**au moins une des parties de moule finisseur (4a, 4b) comporte des composants magnétiques (6, 8) dont l'intensité de champ est variable.

4. Dispositif selon la revendication 1 ou la revendication 2,
**caractérisé**
**en ce qu'**au moins un des éléments de support (2a, 2b) comporte des composants magnétiques (6, 8) dont l'intensité de champ est variable.

5. Dispositif selon au moins une des revendications précédentes,
**caractérisé**
**en ce que** les parties de moule finisseur (4a, 4b) s'étendent dans une direction longitudinale (L) et, dans un état d'accouplement avec l'élément de support (2a, 2b), sont rotatifs par rapport à l'élément de support (2a, 2b) dans au moins un premier sens de rotation autour d'un axe réel ou virtuel situé en direction longitudinale (L).

6. Dispositif selon la revendication 4,
**caractérisé**
**en ce que** la partie de moule finisseur (4a, 4b) coopère par accouplement mécanique avec une butée (12) dans un deuxième sens de rotation (13) opposé au premier sens de rotation.

7. Dispositif selon la revendication 5,
**caractérisé**
**en ce qu'**au moins une partie de moule finisseur (4a, 4b) et au moins un élément de support (2a, 2b) comportent des composants magnétiques (6, 8) coopérant par accouplement de champ, lesquels sont au moins décalés dans un état de contact, et provoquent que la partie de moule finisseur (4a, 4b) soit soumise à un couple dans le deuxième sens de rotation (13), pour un positionnement défini.

8. Dispositif selon l'une des revendications 1 à 3,
**caractérisé**
**en ce que** la partie de moule finisseur (4a, 4b) et l'élément de support (2a, 2c) sont toujours raccordés par accouplement mécanique dans un état de contact, pour empêcher un mouvement de rotation de la partie de moule finisseur (4a, 4b) par rapport à l'élément de support (2a, 2b).

9. Dispositif selon au moins une des revendications 1 à 7,
**caractérisé**
**par** au moins une partie de fond de moule finisseur (24), qui dans une zone de fond des parties de moule finisseur (4a, 4b) peut être mise en contact avec celles-ci, est déplaçable par rapport aux éléments de support (2a, 2b) et/ou aux parties de moule finisseur (4a, 4b), et peut être magnétiquement accouplée avec les parties de moule finisseur (4a, 4b) pour former un espace au moins partiellement fermé.

10. Dispositif selon au moins une des revendications précédentes,
**caractérisé**
**en ce que** les composants magnétiques (6, 8) sont sélectionnés dans un groupe composé au moins d'électro-aimants, d'aimants permanents et/ou de matériaux pouvant être magnétiquement sollicités pour coopérer avec le ou les champs magnétiques.

11. Dispositif selon au moins une des revendications précédentes,
**caractérisé**
**en ce que** l'accouplement magnétique entre les parties de moule finisseur (4a, 4b) et/ou une partie de moule finisseur (4a, 4b) et un élément de support (2a, 2b) peut être court-circuité ou généré par rotation d'au moins un aimant permanent prévu sur au moins une partie de moule finisseur (4a, 4b) et/ ou un élément de support (2a, 2b).

12. Dispositif selon la revendication 10,
**caractérisé**
**en ce que**, mobile par rapport à au moins deux aimants (7a, 7b), un élément mobile de commande de champ (34) est prévu, lequel court-circuite les deux aimants au moins (7a, 7b) dans une position.

13. Dispositif selon au moins une des revendications précédentes,
**caractérisé**
**en ce que** l'accouplement magnétique entre les parties de moule finisseur (4a, 4b) et/ou une partie de moule finisseur (4a, 4b) et un élément de support (2a, 2b) peut être annulé ou généré par démagnétisation ou magnétisation d'au moins un aimant permanent.

14. Dispositif selon au moins une des revendications 1 à 12,
**caractérisé**
**en ce que** l'accouplement magnétique entre les parties de moule finisseur (4a, 4b) et/ou une partie de moule finisseur (4a, 4b) et un élément de support (2a, 2b) peut être modifié, de préférence généré ou annulé, par commande d'au moins un électro-aimant (14a, 14b, 14c, 14d), de préférence d'au moins un électro-aimant (14a, 14b, 14c, 14d) prévu sur la partie de moule finisseur (4a, 4b) et d'au moins un électro-aimant (14a, 14b, 14c, 14d) prévu sur l'élément de support (2a, 2b).

15. Dispositif selon au moins une des revendications précédentes,
**caractérisé**
**en ce qu'**au moins un dispositif de capteur est prévu pour surveiller les intensités de champ générées par les composants magnétiques.
